# EUROPÄISCHE PATENTSCHRIFT

(11) **EP 2 347 422 B1**
(45) Veröffentlichungstag und Bekanntmachung des Hinweises auf die Patenterteilung: **07.01.2015**
(21) Anmeldenummer: 09752162.9
(22) Anmeldetag: 09.11.2009
(51) Int. Cl.: G21F 9/30, C03C 3/00

(54) **MATRIXMATERIAL AUS GRAPHIT UND ANORGANISCHEN BINDEMITTELN GEEIGNET ZUR ENDLAGERUNG VON RADIOAKTIVEN ABFÄLLEN, VERFAHREN ZU DESSEN HERSTELLUNG, DESSEN VERARBEITUNG UND VERWENDUNG**
MATRIX MATERIAL COMPOSED OF GRAPHITE AND INORGANIC BINDERS AND SUITABLE FOR FINAL STORAGE OF RADIOACTIVE WASTE, METHOD FOR THE MANUFACTURE THEREOF, AND PROCESSING AND USE THEREOF
MATÉRIAU MATRICIEL EN GRAPHITE ET LIANT INORGANIQUE, CONVENANT POUR LE STOCKAGE FINAL DE DÉCHETS RADIOACTIFS, SON PROCÉDÉ DE FABRICATION, SA TRANSFORMATION ET SON UTILISATION

(30) Priorität: 10.11.2008 DE 102008043618; 26.11.2008 DE 102008044089; 30.03.2009 DE 102009001977
(43) Veröffentlichungstag der Anmeldung: 27.07.2011
(73) Patentinhaber: ALD Vacuum Technologies GmbH, 63450 Hanau (DE)
(72) Erfinder: HROVAT, Milan, 63517 Rodenbach (DE); GROSSE, Karl-Heinz, 63584 Gründau (DE); SEEMANN, Richard, 63456 Hanau (DE)
(74) Vertreter: Fuchs Patentanwälte Partnerschaft mbB
(86) Internationale Anmeldenummer: PCT/EP2009/064830
(87) Internationale Veröffentlichungsnummer: WO 2010/052321

(56) Entgegenhaltungen:
- EP-A1- 0 081 084
- DE-A1- 1 421 850
- FR-A1- 2 550 879
- US-A- 4 395 367

## Beschreibung

Die vorliegende Erfindung betrifft ein Matrixmaterial, das aufgrund seiner besonderen Beschaffenheit zur sicheren Endlagerung von radioaktiven Abfällen geeignet ist. Die Erfindung betrifft auch ein Verfahren zur Herstellung und Verarbeitung solcher Matrixmaterialien sowie deren Verwendung.

Radioaktive Abfälle können beispielsweise abgebrannte Brennelemente (BE) aus Kernkraftwerken und die entstandenen Abfälle aus der Wiederaufarbeitung sein, sowie auch anfallende radioaktive Stoffe, die beim Rückbau von Kerntechnischen Anlagen oder die beim Umgang mit radioaktiven Stoffen in Kerntechnik, Medizin und Industrie anfallen und nicht mehr genutzt werden können.

Bei der Aufarbeitung von abgebrannten Brennelementen, z.B. eines Leichtwasser-Kernreaktors (LWR) oder eines Schwerwasserreaktors (SWR) mit einer Leistung von 1000 MWe, fallen jährlich etwa 750 kg hochradioaktive Abfälle an Die Abfälle liegen nach der Aufarbeitung in flüssiger Form vor und werden vorzugsweise durch Kalzinierung in eine feste Form überführt. Hinzu kommt, dass sich die Zerfallswärme (Decay Heat) und die Halbwertszeiten (Half-Life-Periods) der entsprechenden Spaltprodukte um mehrere 10er Potenzen voneinander unterscheiden.

Zur Konditionierung und Lagerung von radioaktiven Abfällen, z.B. aus dem Betrieb von Kernkraftwerken oder Forschungseinrichtungen, wurde eine Reihe von Verfahren entwickelt, die heute in verschiedenen Formen angewendet werden. Konditionierung von radioaktiven Abfällen bedeutet, dass die radioaktiven Abfälle in eine endlagerungsfähige Form überführt werden. Es gibt verschiedene Verfahren um den radioaktiven Abfall mit vernachlässigbarer Wärmeentwicklung sicher zu verpacken und die Endlagerungsbedingungen einzuhalten. Die radioaktiven Abfälle könnten beispielsweise in sogenannte coated particles (beschichtete Teilchen) oder Glasperlen aus Borosilikatglas überführt werden. Allerdings müssen diese konditionierten radioaktiven Abfälle trotzdem unter sicheren Bedingungen endgelagert werden, damit beispielsweise nicht durch Auslaugung und Migration, Radionuklide in die Biosphäre freigesetzt werden können.

Das Verfahren der Verglasungstechnik wird vorzugsweise für hochradioaktiven Abfall nach einer Wiederaufarbeitung abgebrannter Brennstäbe angewendet. Dieses Glas-Abfall-Gemisch wird gemäß dem heutigen Stand der Technik in spezielle metallische Behälter eingebracht und zur Langzeitlagerung bereitgestellt.

Weiterhin werden abgebrannte Brennelemente auch ohne Wiederaufarbeitung in spezielle metallische Behälter zur Langzeitlagerung eingebracht.

Die Problematik dieser Behälter liegt vor allem darin, dass alle bis heute bekannten metallischen Materialien eine zu erwartende Korrosionsbeständigkeit von maximal 10.000 Jahren haben und somit ein sicherer Einschluss der radioaktiven Abfälle nicht gegeben ist. Es ist bekannt, dass die Spaltprodukte erheblich längere Halbwertzeiten haben als bis heute erhältliche Materialien überdauern. Zudem gibt es Einflüsse, wie pH-Wert Schwankungen, die zu einer Korrosion des Behältermaterials und somit zur Auslaugung des Waste-Gebindes führen, was ein erhebliches Risiko für den Austritt der radioaktiven Spaltprodukte darstellt. Die Anforderungen an eine sichere Endlagerung sind somit nicht erfüllt.

Die Verwendung nicht metallischer Werkstoffe als Behälter ist bisher aufgrund verschiedener Tatsachen, wie beispielsweise unzureichende Korrosions- und Auslaugbeständigkeit, unzureichende Festigkeit, zu große Porosität, nicht angezeigt.

Materialien aus Graphit und organischen Bindemitteln sind auch nachteilig. Die Bindemittel sorgen dafür, dass die einzelnen Bestandteile während des Herstellungsprozesses miteinander verbunden werden. Allerdings müssen die eingebrachten Bindemittel anschließend wieder aus den Materialien entfernt werden, da sie beim Verbleib ansonsten die Eigenschaften des hergestellten Produktes beeinträchtigen, da durch die radioaktive Strahlung das organische Bindemittel geschädigt wird und teilweise in gasförmige Bestandteile zerlegt werden, die anschließend aus dem Material wieder austreten. Diese gasförmigen Zersetzungsprodukte sind zum Teil brennbar und stellen damit ein potentielles Risiko für die Endlagerung dar. Dabei entstehen Poren, die unerwünscht sind, da sie die Korrosions- und Auslaugungsbeständigkeit des Produktes erheblich beeinträchtigen.

Das Patent DE 29 17437 C2 aus 1979 beschreibt ein Verfahren zum Einbinden von festen radioaktiven und toxischen Abfällen in eine Graphit - Matrix aus Naturgraphit mit Schwefel oder einem Metallsulfid als Bindemittel, wobei als Bindemittel ausschließlich Nickelsulfid erwähnt ist.

Die Offenlegungsschrift DE 31 44754 A1 aus 1983 beschreibt die Herstellung eines Formkörpers aus Graphit und einem anorganischen Bindemittel zur sicheren Langzeit-Einbettung von radioaktiven Abfällen. Diese Schrift bezieht sich im Wesentlichen auf die Herstellung eines Formkörpers aus einer solche MaterialMischung, wobei darin das Bindemittel auf Metallsulfide, im wesentlichen Nickelsulfide beschränkt ist. Nachteilig gegenüber der vorliegenden Erfindung ist, dass Nickelsulfid zwar als in Wasser schwer löslich, aber die Löslichkeit in sauren Medien stark ansteigt, was die Tauglichkeit als endlagerfähige Einbettmasse in Frage stellt.

Das Patent DE 31 44755 C2 aus 1984 beschreibt einen Formkörper aus Graphit und Nickelsulfid zur Einbindung von abgebrannten Kernbrennstäben und ein Verfahren seiner Herstellung.

Dies gilt auch für Materialien, die Graphit und Bindemittel umfassen. Das Einbinden eine HLW-Simulats (High Level Waste-Simulats) in eine Graphit-Nickelsulfid-Matrix ist in der Veröffentlichung von M. Hrovat et al. "Highly Dense Graphite Matrix: New Materials of the Conditioning of Radioactive Waste", Nuclear Technology, Vol. 61, June 1983, Seiten 460 bis 464, beschrieben. Der Nachteil einer Graphit-Nickelsulfid-Matrix ist insbesondere die vom pH-Wert abhängige Stabilität des Materials. Der entsprechende Korrosionswert, gemessen in gesättigter Lauge mit 0,1 m HCl bei Raumtemperatur, liegt um mehr als eine Zehnerpotenz höher als der bei 100 °C gemessene Wert ohne HCl-Zusatz.

Die Offenlegungsschrift DE 31 44764 A1 aus 1981 beschreibt einen Formkörper zur Einbettung radioaktiver Abfälle und seine Herstellung unter Verwendung von Nickelsulfid in der Form von Ni₃S₂ als Bindemittel für Graphit.

Das Patent DE 32 37163 C2 aus 1982 beschreibt einen Konstruktionswerkstoff aus 20 - 80 Gew.% Metallsulfid und Kohlenstoff für die Verwendung zur Herstellung von Bauteilen mit guten Gleiteigenschaften.

US 4,274,976 beschreibt ein Verfahren zur Einbindung von radioaktivem Abfall in eine Kristallstruktur aus Oxiden, die aufgrund ihrer Gitterabstände für eine Demobilisierung des Abfalls sorgen sollen. Dabei erwies sich die Verdichtung des Materials zu Formkörpern erforderlicher Dichte als äußerst schwierig.

US 3,624,005 aus dem Jahre 1962 beschreibt ein Material aus Graphit und Glas, dass für die Herstellung von Bürsten für Elektromotoren und Graphit-Lager verwendet wird. Wesentliche Inhalte dieser Erfindung sind neben den schon genannten Anwendungen dieses Materials dessen Bearbeitbarkeit und Polierbarkeit sowie die gute Verschleißbeständigkeit und niedrigen Reibewert angeführt. Dies alles sind Eigenschaften, die für die vorliegende Erfindung keinerlei Bedeutung haben. Das hier beschriebene Material weißt aufgrund der Porosität bei Graphitgehalten von über 60 Gew.% keinen ausreichenden Schutz gegen das Eindringen von aquatischen Phasen auf.

Eine der wichtigsten Anforderungen um den radioaktiven Abfall, beispielsweise den hoch radioaktiven Abfall (High Level Waste = HLW), Endlagern zu können, ist die sichere Abfall-Einbindung über geologische Zeiträume. Wünschenswert sind Zeitspannen von bis zu 1 Mio. Jahre oder länger. Diese Anforderung erfüllt keines der bisher bekannt gewordenen Verfahren zur Endlagerung. Gleiches gilt für die entsprechenden Materialien.

Es ist somit die Aufgabe der vorliegenden Erfindung ein Matrixmaterial bereitzustellen, das zur sicheren Einbettung und Endlagerung von radioaktiven Abfällen geeignet ist.

Die Aufgabe wird gelöst durch ein Matrixmaterial für die sichere Zwischen- und/oder Endlagerung von radioaktiven Abfällen, das zur Endlagerung von radioaktiven Abfällen geeignet ist, dadurch gekennzeichnet, dass das Matrixmaterial Graphit und ein anorganisches Bindemittel, ausgewählt aus Gläsern, Alumosilikaten und/oder Silikaten und/oder Boraten umfasst, wobei das Matrixmaterial zu 60 Ges.-% bis 90 Ges.-% Graphit und zu 10 Gew.-% bis 40 Gew.-% anorganisches Bindemittel umfasst, und wobei die Dichte des Matrixmaterials mindestens 97% des Wertes für die theoretische Dichte erreicht.

Vorzugsweise ist das anorganische Bindemittel ein Glas, weiter bevorzugt eingesetzt als Glaspulver. Alternativ dazu kann das anorganische Bindemittel auch ein Silikat, Alumosilikat oder Borat sein.
Ein weiterer Vorteil dieser graphit-basierten Matrix ist deren hohe Wärmeleitfähigkeit, hohe Härte / Festigkeit und relativ geringe Wärmeausdehnung sowie die außergewöhnlich geringe Rissempfindlichkeit.

Als anorganisches Bindemittel eignen sich, wie zuvor gesagt, Gläser, Alumosilikate und Silikate oder Borate. Alumosilikate ist die Bezeichnung für Minerale und chemischen Verbindungen aus der Gruppe der Silikate, die sich aus den Grundbausteinen SiO₄-Tetraeder und AlO₄-Tetraeder aufbauen.

Bevorzugte Ausführungsformen dieser Erfindung umfassen Gläser als anorganisches Bindemittel, weiter bevorzugt ein Borosilikatglas. Der Vorteil von Borosilikatgläsern ist eine gute Korrosionsstabilität. Borosilikatgläser sind sehr chemikalien- und temperaturbeständige Gläser. Die gute chemische Beständigkeit beispielsweise gegenüber Wasser, vielen Chemikalien und pharmazeutischen Produkten erklärt sich durch den Bor-Gehalt der Gläser. Die Temperaturbeständigkeit und Unempfindlichkeit der Borosilikatgläser gegen plötzliche Temperaturschwankungen sind eine Folge des geringen Wärmeausdehnungskoeffizienten von etwa 3,3x10⁻⁶ K⁻¹ von Borosilikatglas. Zum Anmeldungstag gängige Borosilikatgläser sind beispielsweise Jeaner Glas, Duran®, Pyrex®, Ilmabor®, Simax®, Solidex® und Fiolax®. Der Fachmann wird problemlos ein geeignetes Borosilikatglas auswählen.

Das anorganische Bindemittel liegt zwischen 10 bis zu 40 Gew-%, bezogen auf das gesamte Matrixmaterial, vor. Des Weiteren liegt das anorganische Bindemittel vorzugsweise zu 10 bis 30 Gew.-% und weiter bevorzugt zu 15 bis 25 Gew.-% vor.

Das anorganische Bindemittel ist vorzugsweise ein im erweichten bzw. erschmolzenen Zustand Graphit-benetzendes Material, weil sich dadurch die Hohlräume zwischen den Graphit-Partikeln durch Kapillarkräfte bzw. Adhäsionskräfte von selbst schließen können, ohne dass ein äußerer Druck zum Verdichten erforderlich ist.

Wenn in dieser Beschreibung und in den Ansprüchen von radioaktiven Abfällen oder von radioaktivem Abfall die Rede ist, so sind damit alle radioaktiven Abfälle gemeint. Diese Begriffe beziehen sich also nicht nur auf hoch radioaktive Abfälle, sondern auch auf schwach radioaktive Abfälle und mittel radioaktive Abfälle.
Der radioaktive Abfall kann beispielsweise vorliegen als
- coated Waste particles,
- mit Waste beladene Glasperlen,
- calciniertes, radioaktives Pulver,
- abgebrannte Brennelementkugeln,
- radioaktiver Abfall in Form von Pulver und/oder Segmenten von prismatischen Brennelementen oder Reflektorblöcken,
- abgebrannte LWR (Leichtwasser-Reaktor) und/oder SWR (Schwerwasser-Reaktor) Brennstäbe,
- unlöslicher, radioaktiver Rückstand ("Feed-Klärschlamm") aus der Brennelement-Auflösung

Die Aufzählung ist beispielhaft und nicht abschließend.

Die speziellen anorganischen Bindemittel gemäß der vorliegenden Erfindung haben den Vorteil, dass das jeweils eingesetzte Bindemittel im Gegensatz zu herkömmlichen Bindemitteln während der Wärmebehandlung keine gasförmigen Crack-Produkte bildet, die zur Porenbildung in der Matrix führen. Das bedeutet, die anorganischen Bindemittel gemäß der vorliegenden Erfindung durchlaufen keine Umsetzungsprozesse und es entstehen dadurch keine Poren. Das jeweilig verwendete anorganische Bindemittel gemäß der vorliegenden Erfindung weist des Weiteren den Vorteil auf, dass es Poren, die sich dennoch bilden könnten, verschließt, was zu den hohen Dichten und der guten Korrosionsbeständigkeit führt.

Durch das Einbetten des radioaktiven Abfalls in das erfindungsgemäße Matrixmaterial wird die Abfuhr der Zerfallswärme der Radionukliden auf Grund der hohen Wärmeleitfähigkeit des Matrixmaterials deutlich verbessert.

Des Weiteren stellt das Matrixmaterial eine hervorragende korrosions- und auslaugungsbeständige Barriere dar. Die flächenbezogene Korrosionsrate des Matrixmaterials bei 95°C in einer magnesiumchloridreichen Salzlauge¹ ist geringer als 2x10⁻⁴g/m²d, weiter bevorzugt geringer als 2x10⁻⁵g/m²d und besonders bevorzugt sogar geringer als 2x10⁻⁶g/m²d. Ein Liter Salzlauge zur Messung der Korrosionsrate besteht aus 937,1 g MgCl₂*6H₂O, 0,13 g MgSO₄*7H₂O, 4,13 g NaCl, 1,42 g KCl und 39,68 g CaCl₂*2H₂O gelöst in entionisiertem Wasser. Die Korrosionsrate bei 95°C wird wie folgt bestimmt: Ein Formkörper hergestellt aus dem Matrixmaterial mit den Abmassen 10*10*10 mm wird in 100 ml Salzlauge, die sich in einem Kunstoffbecherglas befindet, getaucht. Dabei wird der Formkörper an einem Bindfaden so aufgehängt, dass keine der Seitenflächen das Becherglas berührt. Nach 3 Monaten bzw. einem Jahr wird das Gewicht des Formkörpers mit einer Genauigkeit von 0,1 mg bestimmt und über den Gewichtsverlust die flächenbezogene Korrosionsrate bestimmt. Alternativ soll der ausgelaugte Siliciumgehalt in der Salzlösung und somit auch die Glaskorrosionsrate bestimmt werden.
¹ Lauge 2 gemäß "Stellungnahme des Arbeitskreis HAW-Produkte: Korrosionsexperimente an verglasten Abfällen, Salzlösungen zu S/V-Verhältnis; 1986"

Es ist erfindungsmäßig, dass das Matrixmaterial zu 60 Gew.-% bis 90 Gew.-% Graphit und zu 10 Gew.-% bis 40 Gew.-% anorganisches Bindemittel, umfasst, wobei die Dichte des Matrixmaterials mindestens 97% des Wertes für die theoretische Dichte erreicht. Idealerweise wird eine Dichte von mehr als 99% der theoretischen Dichte erreicht.

Es ist erfindungsmäßig bevorzugt, dass das Matrixmaterial eine offene Porosität weniger als 5%, weiter bevorzugt weniger als 2% hat.

Der Begriff der Dichte bzw. der theoretischen Dichte wird in der vorliegenden Beschreibung als Synonym zu Porenfreiheit des Materials verwendet. Unter der theoretischen Dichte wird die Dichte verstanden, die sich aus z.B. röntgengeografischen Daten (molare Masse, Anzahl Formeleinheiten der Elementzelle, Volumen der Elementzelle) berechnen lässt. Es ist wichtig, dass das Matrixmaterial eine hohe Dichte aufweist, damit beispielsweise keine Feuchtigkeit in das Matrixmaterial eindringen kann. Die hydraulische Leitfähigkeit des Matrixmaterials in der vorliegenden Erfindung soll <1x10⁻⁹ m²/sek. betragen. Des Weiteren verhindert das Matrixmaterial durch seine dichte Struktur das Eindringen von beispielsweise aquatischen Phasen in das Material.

Der Begriff der Porosität ist eine physikalische Größe und stellt das Verhältnis von Hohlraumvolumen zu Gesamtvolumen eines Stoffes oder Stoffgemisches dar. Die Porosität dient als klassifiziertes Maß für die tatsächlichen vorliegenden Hohlräume.

Es ist bevorzugt, dass der Graphit in dem erfindungsgemäßen Matrixmaterial aus zu 20 Gew.-% bis 100 Gew.-% Naturgraphit und aus zu 0 Gew.-% bis 80 Gew.-% synthetischem Graphit besteht.

Weiter bevorzugt ist, dass die Graphitmischung in dem erfindungsgemäßen Matrixmaterial zu 60 bis 100 Gew.-% aus Naturgraphit und zu 0 bis 40 Gew.-% aus synthetischem Graphit besteht. Der synthetische Graphit kann auch als graphitiertes Elektropulver (Elektrographit) bezeichnet werden. Es ist erfindungsgemäß besonders bevorzugt, dass der Graphit in dem erfindungsgemäßen Matrixmaterial einen Anteil aus Naturgraphit umfasst. Der Naturgraphit hat den Vorteil, dass er preisgünstig ist, das Graphitkorn im Gegensatz zu synthetischem Graphit keine Mikrorisse aufweist und sich zusätzlich beispielsweise leicht zu Formkörpern mit nahezu theoretischer Dichte verpressen lässt.

Es ist weiter bevorzugt, dass der Graphit Naturgraphit oder synthetischer Graphit oder eine Mischung aus beiden Komponenten ist.

Der in der Matrix enthaltene synthetische oder natürliche Graphit kann als unbestrahlter und/oder bestrahlter oder/oder radioaktiv kontaminierter Graphit vorliegen. Das verwendete Glas kann ebenfalls radioaktive Komponenten enthalten.

Dem Matrixmaterial könnte des weiteren zusätzlich ein Presshilfsmittel beigemischt werden.

Dabei sind folgende Zusammensetzungen der Matrixkomponenten vorgesehen:

| Naturgraphit [Gew.-%] | Synt. Graphit [Gew.-%] | anorganischer Binder [ Gew.-%] | Presshilfsmittel |
|---|---|---|---|
| 70 - 90 | | 30 - 10 | Nein |
| 0 - 70 | 80 - 10 | 10 - 30 | Nein |
| | 70 - 90 | 30 - 10 | Ja |
| 70 - 90 | | 30 - 10 | Ja |
| 0 - 70 | 80 - 10 | 10 - 30 | Ja |

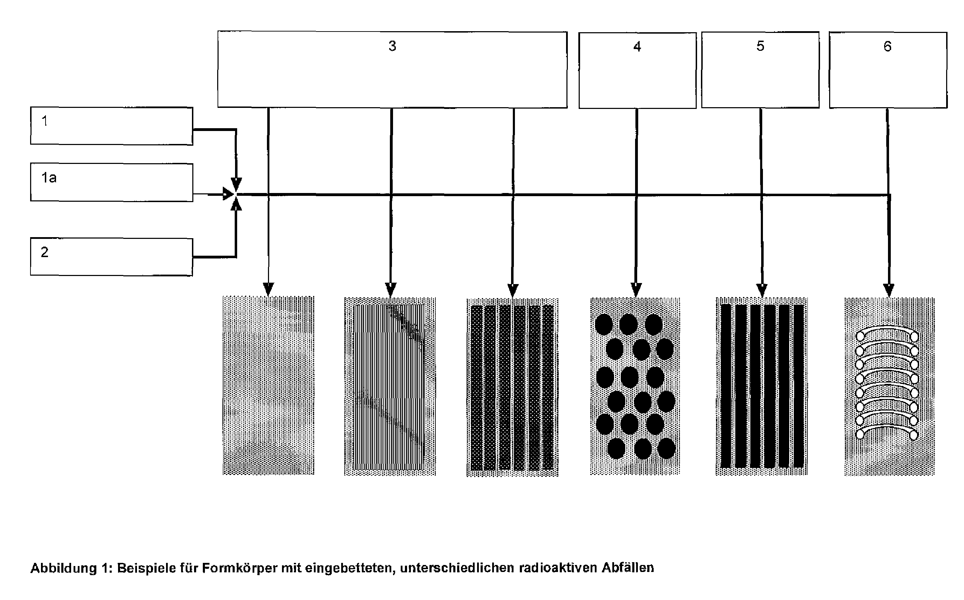

Als Presshilfsmittel sind bei höherer Temperatur in Vakuum flüchtige Wachse oder höhermolekulare Alkohole vorgesehen, die eine ausreichende Grünkörperstabilität ermöglichen aber beim Sinterprozess vollständig aus dem Formkörper entfernt werden, so dass ihr Anteil nicht zu den Matrixbestandteilen hinzugerechnet werden muss.
In einem Zwischenschritt wird, je nach Art der Herstellung und des einzubettenden Abfalls, ein Formkörper mit Kavitäten durch einen Vorpressvorgang erzeugt. Die Herstellung der finalen Formkörper erfolgt entweder durch kaltisostatisches Pressen, gefolgt von einem Vakuumsinterprozess, gegebenenfalls mit einem anschließenden isostatischem Verdichten unter hohem Inertgasdruck, durch heißisostatisches Pressen oder mittels Heißpressen im Vakuum.
Für alle Herstellungsverfahren wird eine homogenisierte Mischung der Matrixkomponenten eingesetzt, wobei eine zusätzliche Vorverdichtung des Matrixmaterials in Form eines Granulats von Vorteil für das Pressen des Formkörpers ist.
Die Einbettung pulverförmiger radioaktiver Abfälle, insbesondere die Einbettung von radioaktivem Graphit, kann durch ein direktes Vermischen mit den nicht radioaktiven Matrixkomponenten erfolgen, wobei dies gegebenenfalls nur Glaspulver sein kann. Dabei ist es von Vorteil, dieses Gemisch kalt zu einem Formkörper zu pressen und anschließend einen solchen Formkörper noch einmal zusätzlich mit einer äußeren Hülle aus Matrixmaterial ohne beigemischte radioaktive Abfälle zu einem assemblierten Formkörper zu pressen oder das mit radioaktiven Abfällen vermischte Matrixmaterial in eine Kavität eines kalt gepressten Formkörpers ohne radioaktive Komponenten einzupressen, so dass die äußere Wand des endgefertigten, hochverdichteten Formkörpers keine radioaktiven Materialien enthält.
Für die Einbettung von radioaktiven Abfällen in Form größerer geometrischer Körper (siehe Abbildung 1) wird ein Formkörper mit entsprechenden Kavitäten vorgeformt und die Kavitäten werden gleichmäßig mit den Abfallteilen und Matrixmaterial vollständig vor dem Pressvorgang verfüllt,
Beispiele für mögliche einzubettende Abfälle sind:
- HTR-Brennelementkugeln
- Segmente, Bruchstücke oder Granulate aus prismatischen HTR-Brennelementen (HTR = Hochtemperatur-Reaktoren)
- Mit radioaktiven Abfällen beladene Glasperlen
- Coated Particles aus HTR-Brennelementen
- Materialtestreaktorbrennelemente bzw. Segmente von Materialtestreaktorbrennelementen
- Brennelementhülsenschrott aus der Wiederaufarbeitung
- LWR-/SWR-Brennelementstäbe
- Segemente von Reaktorcoreeinbauten
- Calciniertes HLW-Pulver
- unlösliche, radioaktive Rückstände ("Feed-Klärschlamm") aus der Brennelement-Auflösung

Aus dem Matrixmaterial werden bevorzugt Formkörper hergestellt, in den bevorzugt radioaktive Abfälle eingebettet werden.

### Herstellungsbeispiel eines Formköpers aus einem Glas-Graphitgemisch

### Beispiel 1:

Naturgraphit mit einer mittleren Partikelgröße von ca. 30µm wurde mit 20% Borosilikatglas (Fa. Schott 8250™) mit einer mittleren Partikelgröße von ca. 30µm zu einem homogenen Pulver vermischt. Diese Pulvermischung wurde in einem Kompaktor (Pharmapaktor^{®} L 200/50 P der Fa. Hosokawa Bepex) vorverdichtet. Der Pharmapaktor ist mit Brikettierwalzen mit den Brikettformabmessungen 11 x 11 mm und einer zylindrisch/konischen Vorverdichterschnecke ausgerüstet. Das Brikettgewicht der so hergestellten Pellets lag bei ca. 0,7 g bei einer Brikettdichte von 1,64 g/cm³. Anschließend wurden die Pellets in einer Siebmühle granuliert. In der Siebmühle ist ein Siebeinsatz mit der Maschenweite 3,15 mm eingebaut. Nach der Zerkleinerung ergaben sich etwa folgende Schüttgewichte:
Granulat:
   0,8 bis 3,15 mm → 986 g/l
   0 bis 3,15 mm → 1.030 g/l
Die Granulatausbeute betrug dabei 49%.

Das so hergestellte Granulat wurde anschließend in einer Heißpresse im Vakuum (p_{abs} < 10 mbar) bei einer Temperatur ca. 1050°C mit einer Presskraft von 200kN verdichtet.
Der so hergestellte Formkörper hat einen Durchmesser von 80 mm und eine Höhe von ca. 50 mm. Die Dichte des Formkörpers beträgt 2.21 g/cm³ und liegt somit nahe an der theoretischen Dichte von Graphit-Einkristall mit 2.26 g/cm³ was mit einer nahezu porenfreien Struktur gleichzusetzen ist. Von dem Formkörper wurden Schliffproben hergestellt, die sowohl unter Betrachtung im optischen Mikroskop als auch im Rasterelektronenmikroskop keine erkennbaren Poren aufwiesen.
Materialkenndaten:

| | |
|---|---|
| Druckfestigkeit: | 52 - 71 N/mm² |
| Rockwellhärte HR15Y: | ∥ 92,2 |
| | ┴ 87,8 |
| Spez. elek. Widerstand: | ∥ 3,1±0.2·10-5 Ωm |
| | ┴ 1,8±0.2·10-5 Ωm |

Eine Untersuchung mittels Quecksilberporosimetrie ergab keine offene Makro- oder Mikroporosität. Auch Aufnahmen mit dem Rasterelektronenmikroskop geben keinerlei Hinweise auf das Vorhandensein von Poren.

### Beispiel 2:

Eine Mischung aus einem Teil synthetischem Graphit (Graptech Grade CS) und vier Teilen Naturgraphit mit mittleren Partikelgrößen von ca. 30 µm wurde mit 20% Borosilikatglas (Fa. Schott 8330™) mit einer mittleren Partikelgröße von ca. 300 µm zu einem homogenen Pulver vermischt und wie im Beispiel 1 vorverdichtet und granuliert. Granulat: 0,8 - 3,15 mm → 932 g/l bzw. 0 - 3,15mm → 954 g/l
Die Granulatausbeute betrug dabei 49%.
Das so hergestellte Granulat wurde anschließend in einer Heißpresse im Vakuum (p_{abs} ~ 250 mbar) bei einer Temperatur ca. 1250°C mit einer Presskraft von 200 kN verdichtet.
Der so hergestellte Formkörper hat einen Durchmesser von 80 mm und eine Höhe von ca. 25 mm. Die Dichte des Formkörpers beträgt 2.13 g/cm³ und zeigt somit eine geringfügig geringere Dichte als der Formkörper im Beispiel 1. Dennoch ist ein Graphitformkörper mit einer solchen Dichte ebenfalls mit einer nahezu porenfreien Struktur gleichzusetzen. Mit der Untersuchung von Schliffbildern mittels optischer Mikroskopie kann die Verwendung der gröberen Glaspartikel als Ursache für die geringere Dichte identifiziert werden.

### Anwendungsbeispiele

### 1. Beispiel: Einbettung von radioaktivem Graphit (siehe Abbildung 1)

Für diesen Zweck wird der bestrahlte Graphit direkt oder in einer Mischung mit Naturgraphit als Matrixmaterial verwendet. Zuerst wird der vorliegende, bestrahlte Graphitabfall gemahlen und gesiebt, damit ein Pulver mit einer mittleren Korngröße von 10 bis 50 µm, vorzugsweise 25 µm erzeugt wird. Anschließend werden die pulverförmigen Komponenten des bestrahlten Graphites und Glaspulver, gegebenenfalls mit einem Zusatz von Naturgraphit, zu einem homogenen Pulver vermischt und dieses Gemisch granuliert. Aus diesem Granulat werden bei Raumtemperatur Presslinge hergestellt, deren Grünfestigkeit so eingestellt ist, dass diese Presslinge handhabbar sind. Parallel dazu wird eine Matrix-Mischung aus unbelastetem synthetischen Graphit, gegebenenfalls unter Beimischung von Naturgraphit, und Glas hergestellt und ebenfalls zu Granulat verarbeitet. Aus diesem zweiten Granulat wird bei Raumtemperatur ein Block mit einer oder mehreren Kavitäten hergestellt, dessen Grünfestigkeit ebenfalls so eingestellt ist, dass dieser Formkörper handhabbar ist. Dabei ist / sind die Kavität(en) so ausgebildet, dass sie die vorher hergestellten, mit bestrahltem Material belasteten Presslinge aufnehmen können. Diese Presslinge werden dann in die Kavitäten des Blockes eingesetzt und der vorgesehene obere Freiraum in den Kavitäten mit unbelastetem Granulat verfüllt. Anschließend wird dieser so assemblierte Block bei einer Temperatur von 1000°C auf Enddichte unter Vakuum in einem dafür geeigneten Werkzeug fertig gepresst und nach Abkühlung auf 250°C ausgestoßen.

### 2. Beispiel: Einbettung abgebrannter LWR-Brennelemente (siehe Abbildung 1)

Abgebrannte Brennstäbe aus Leichtwasserkernreaktoren (LWR) ohne Aufarbeitung werden in das Matrixmaterial aus Naturgraphit und / oder synthetischem Graphit und Glas eingebettet.
Die Brennstäbe werden dabei spiralförmig aufgewickelt und schichtweise durch Pressen bei Raumtemperatur in das zuvor angefertigte Granulat aus dem Matrixmaterial eingebunden. Anschließend wird der so assemblierte Block wie im Beispiel 1 beschrieben, mit diesem Matrixmaterial zu einem homogenen Formkörper verpresst.

### 3. Beispiel: Einbettung abgebrannter HTR-Brennelementkugeln (siehe Abbildung 1)

Abgebrannte Brennelementkugeln aus Hochtemperatur-Reaktoren (HTR) werden in das Matrixmaterial eingebettet. Zunächst werden das Graphitpulver und Glaspulver (siehe Herstellung von Formkörpern Beispiel 1) vermischt und zu Pressgranulat verarbeitet. Die Brennelementkugeln werden schichtweise in dieses Granulat in versetzter Anordnung eingesetzt und durch Vorverdichtung der einzelnen Schichten zu einem Block aufgebaut. Anschließend wird dieser assemblierte Block wie im Beispiel 1 beschrieben, mit diesem Matrixmaterial zu einem homogenen Formkörper verpresst.

### Abbildungsbeschreibung

Abbildung/Figur 1 beschreibt Bespiele für Formkörper, aus Naturgraphit 1 und/oder synthetischen Graphit 1a und/oder Bindemittel 2, in dem unterschiedliche radioaktive Abfälle 3 bis 6 eingebettet sind.

### Bezeichnungsliste

1 = Naturgraphit
1a = synthetischer Graphit
2 = Bindemittel
3 = I-Graphit, gepulvert oder granuliert, calciniertes HLW, gepulvert oder granulierte Glasperlen
4 = HTR-BE-Kugeln
5 = prismatische HTR-BE-Segmente
6 = gerollte LWR-BE

## Patentansprüche

1. Ein Matrixmaterial für die sichere Zwischen- und/oder Endlagerung von radioaktiven Abfällen, geeignet zur Einbettung von radioaktiven Abfällen, **dadurch gekennzeichnet, dass** das Matrixmaterial Graphit und mindestens ein anorganisches Bindemittel, ausgewählt aus Gläsern, Alumosilikaten, Silikaten und Boraten umfasst, wobei das Matrixmaterial zu 60 Gew.-% bis 90 Gew.-% Graphit und zu 10 Gew.-% bis 40 Gew.-% anorganisches Bindemittel umfasst, und wobei die Dichte des Matrixmaterials mindestens 97% des Wertes für die theoretische Dichte erreicht.

2. Das Matrixmaterial nach Anspruch 1, wobei das anorganische Bindemittel ein Glas ist.

3. Das Matrixmaterial nach Anspruch 2, wobei das Glas Borosilikatglas ist.

4. Das Matrixmaterial nach einem oder mehreren der vorhergehenden Ansprüche, wobei der Anteil des anorganischen Bindemittels 10 bis 30 Gew.-%, bezogen auf das gesamte Matrixmaterial, beträgt.

5. Das Matrixmaterial nach einem oder mehreren der vorhergehenden Ansprüche, wobei der Anteil des anorganischen Bindemittels 15 bis 25 Gew.-%, bezogen auf das gesamte Matrixmaterial, beträgt.

6. Das Matrixmaterial nach einem oder mehreren der vorhergehenden Ansprüche, wobei das anorganische Bindemittel im erweichten bzw. erschmolzenen Zustand ein Graphit-benetzendes Material ist.

7. Ein Matrixmaterial nach einem oder mehreren der vorhergehenden Ansprüche, wobei der Graphit Naturgraphit oder synthetischer Graphit oder einer Mischung aus beiden Komponenten ist.

8. Das Matrixmaterial nach einem oder mehreren der vorhergehenden Ansprüche, wobei die Graphitmischung zu 20 bis 100 Gew.-% aus Naturgraphit und zu 0 bis 80 Gew.-% aus synthetischem Graphit besteht.

9. Das Matrixmaterial nach einem oder mehreren der vorhergehenden Ansprüche, wobei die Graphitmischung zu 60 bis 100 Gew.-% aus Naturgraphit und zu 0 bis 40 Gew.-% aus synthetischem Graphit besteht.

10. Das Matrixmaterial nach einem oder mehreren der vorhergehenden Ansprüche, wobei der Graphit unbestrahlten, bestrahlten und radioaktiv kontaminierten Graphit umfasst.

11. Das Matrixmaterial nach einem oder mehreren der vorangehenden Ansprüche, wobei dem Matrixmaterial zusätzlich ein Presshilfsmittel beigemischt ist.

12. Das Matrixmaterial nach einem oder mehreren der vorangehenden Ansprüche, wobei dem Matrixmaterial zusätzlich Kohle und/oder Graphit in der Form von Fasern beigemischt ist.

13. Verwendung eines Matrixmaterials nach einem oder mehreren der vorangehenden Ansprüche, zur Herstellung fester Formkörper.

## Claims

1. A matrix material for the safe interim and/or final storage of radioactive waste suitable for the embedment of radioactive waste, **characterized in that** the matrix material comprises graphite and at least one inorganic binder, selected from glasses, aluminosilicates, silicates and borates, wherein the matrix material comprises 60 % by weight to 90 % by weight of graphite and 10 % by weight to 40 % by weight of inorganic binder and wherein the density of the matrix material is at least 97 % of the value of the theoretical density.

2. The matrix material according to claim 1, wherein the inorganic binder is a glass.

3. The matrix material according to claim 2, wherein the glass is borosilicate glass.

4. The matrix material according to one or more of the preceding claims, wherein the proportion of the inorganic binder is 10 to 30 % by weight based on the whole matrix material.

5. The matrix material according to one or more of the preceding claims, wherein the proportion of the inorganic binder is 15 to 25 % by weight based on the whole matrix material.

6. The matrix material according to one or more of the preceding claims, wherein the inorganic binder in the softened and/or melted state is a graphite-wetted material.

7. A matrix material according to one or more of the preceding claims, wherein the graphite is natural graphite or synthetic graphite or a mixture of both components.

8. The matrix material according to one or more of the preceding claims, wherein the graphite mixture consists of 20 to 100 % by weight of natural graphite and 0 to 80 % by weight of synthetic graphite.

9. The matrix material according to one or more of the preceding claims, wherein the graphite mixture consists of 60 to 100 % by weight of natural graphite and 0 to 40 % by weight of synthetic graphite.

10. The matrix material according to one or more of the preceding claims, wherein the graphite comprises unirradiated, irradiated and radioactively contaminated graphite.

11. The matrix material according to one or more of the preceding claims, wherein to the matrix material in addition a compacting auxiliary agent is admixed.

12. The matrix material according to one or more of the preceding claims, wherein to the matrix material in addition coal and/or graphite in the form of fibers is admixed.

13. Use of a matrix material according to one or more of the preceding claims for the production of solid molded bodies.

## Revendications

1. Matériau matriciel pour le stockage intermédiaire et/ou final fiable de déchets radioactifs, approprié pour l'inclusion de déchets radioactifs, **caractérisé en ce que** le matériau matriciel comprend du graphite et au moins un liant inorganique choisi parmi le verre, les aluminosilicates, les silicates et les borates, dans lequel le matériau matriciel comprend jusqu'à 60% en poids à 90% en poids de graphite et jusqu'à 10% en poids à 40% en poids de liant inorganique, et dans lequel la densité du matériau matriciel atteint au moins 97% de la valeur de la densité théorique.

2. Matériau matriciel selon la revendication 1, dans lequel le liant inorganique est un verre.

3. Matériau matriciel selon la revendication 2, dans lequel le verre est un verre de borosilicate.

4. Matériau matriciel selon une ou plusieurs des revendications précédentes, dans lequel la proportion de liant inorganique est de 10 à 30% en poids par rapport au matériau matriciel total.

5. Matériau matriciel selon une ou plusieurs des revendications précédentes, dans lequel la proportion de liant inorganique est de 15 à 25% en poids par rapport au matériau matriciel total.

6. Matériau matriciel selon une ou plusieurs des revendications précédentes, dans lequel le liant inorganique à l'état ramolli ou fondu est un matériau de réticulation du graphite.

7. Matériau matriciel selon une ou plusieurs des revendications précédentes, dans lequel le graphite est un graphite naturel ou un graphite synthétique ou un mélange des deux composants.

8. Matériau matriciel selon une ou plusieurs des revendications précédentes, dans lequel le mélange de graphite est constitué jusqu'à 20 à 100% en poids de graphite naturel et jusqu'à 0 à 80% en poids de graphite synthétique.

9. Matériau matriciel selon une ou plusieurs des revendications précédentes, dans lequel le mélange de graphite est constitué jusqu'à 60 à 100% en poids de graphite naturel et jusqu'à 0 à 40% en poids de graphite synthétique.

10. Matériau matriciel selon une ou plusieurs des revendications précédentes, dans lequel le graphite comprend du graphite non irradié, irradié et radioactivement contaminé.

11. Matériau matriciel selon une ou plusieurs des revendications précédentes, dans lequel un adjuvant de compression est en outre mélangé au matériau matriciel.

12. Matériau matriciel selon une ou plusieurs des revendications précédentes, dans lequel du charbon et/ou du graphite sous forme de fibres sont en outre mélangés au matériau matriciel.

13. Utilisation d'un matériau matriciel selon une ou plusieurs des revendications précédentes, pour la production de corps moulés solides.
